# EUROPEAN PATENT APPLICATION

(11) **EP 4 783 395 A1**
(43) Date of publication of application: **29.07.2026**
(21) Application number: 25227339.6
(22) Date of filing: 29.12.2025
(51) Int. Cl.: H02J 3/00

(54) **POWER MANAGEMENT DEVICE AND POWER MANAGEMENT SYSTEM**

(30) Priority: 16.01.2025 JP 2025006026
(71) Applicant: Prime Planet Energy & Solutions, Inc., Chuo-ku, Tokyo 103-0022 (JP)
(72) Inventor: KOH, Hideki, Tokyo,, 103-0022 (JP)
(74) Representative: Kuhnen & Wacker Patent- und Rechtsanwaltsbüro PartG mbB

(57) **Abstract**

In power management device, a power consumption predictor creates a predicted consumption time zone in which a predicted power consumption amount of a load for every future elapsed time is predicted. A first calculator calculates a system conversion efficiency of a system power supply for every future elapsed time, and a second calculator calculates a specific conversion efficiency of a specific power supply for the every future elapsed time. A specifier specifies, as a specific time zone, a time zone in which the specific conversion efficiency is greater than or equal to the system conversion efficiency in the predicted consumption time zone. A planner makes a supply plan such that electric power is supplied from the specific power supply to the load for every future elapsed time in the specific time zone.

## Description

### BACKGROUND

The present invention relates to a power management device and a power management system.

For example, JP2021-90258 discloses an electric power system that includes a system power supply and a specific power supply provided separately from the system power supply and that supplies electric power to a load using the system power supply and the specific power supply.

The electric power system includes a first variable part that changes a first supply power, which is the power supplied to the load, by using the system power supply, a second variable part that changes a second supply power, which is the power supplied to the load, by using the specific power supply, and a controller that controls the first variable part and the second variable part so that both the system power supply and the specific power supply supply power to the load.

The controller derives a first set power and a second set power based on an introduction parameter including a target supply power to the load, a first efficiency that is an efficiency of power supply of the system power supply, and a second efficiency that is an efficiency of power supply of the specific power supply. The controller controls the first variable part so that the first supply power corresponding to the first set power is supplied to the load and controls the second variable part so that the second supply power corresponding to the second set power is supplied to the load. JP2021-90258 describes that this configuration enables efficient supply of electric power to the load using the system power supply and the specific power supply.

### SUMMARY

An inventor of the present teaching seeks to supply electric power to a load efficiently by control different from the electric power system described in JP2021-90258 using both a system power supply and a specific power supply.

A power management device disclosed here includes a recorder, a power consumption predictor, a first calculator, a second calculator, a specifier, and a planner. The recorder records a past power consumption amount of a load for every past elapsed time, and the past elapsed time is a time that has elapsed previously. The power consumption predictor creates a predicted consumption time zone in which a predicted power consumption amount of the load for every future elapsed time is predicted based on the past power consumption amount for the every past elapsed time recorded in the recorder, and the future elapsed time is a time to elapse in future. The first calculator calculates a system conversion efficiency in the predicted consumption time zone, the system conversion efficiency is a conversion efficiency of electric power for the every future elapsed time in a case of supplying the predicted power consumption amount for the every future elapsed time from a system power supply to the load, and the system power supply is operable to supply electric power. The second calculator calculates a specific conversion efficiency in the predicted consumption time zone, the specific conversion efficiency is a conversion efficiency of electric power for the every future elapsed time in a case of supplying the predicted power consumption amount for the every future elapsed time from a specific power supply to the load, and the specific power supply is installed separately from the system power supply. The specifier specifies, as a specific time zone, a time zone in which the specific conversion efficiency is greater than or equal to the system conversion efficiency in the predicted consumption time zone. The planner that makes a supply plan indicating which of the system power supply and the specific power supply supplies electric power for the every future elapsed time in the predicted consumption time zone such that electric power in the predicted power consumption amount is supplied from the specific power supply to the load for the every future elapsed time, in the specific time zone.

The power management device disclosed here can supply electric power to the load efficiently by supplying electric power from the specific power supply to the load in the specific time zone in which the specific conversion efficiency is greater than or equal to the system conversion efficiency in the predicted consumption time zone.

### BRIEF DESCRIPTION OF THE DRAWINGS

FIG. 1 is a conceptual view illustrating a power management system according to a preferred embodiment.
FIG. 2 is a block diagram of the power management system according to the preferred embodiment.
FIG. 3 is a flowchart showing a procedure of planning a supply plan.
FIG. 4 is a graph showing an example of a past consumption time zone.
FIG. 5 is a graph showing an example of a predicted consumption time zone.
FIG. 6 is a diagram showing an example of a leaning model generated by machine learning.
FIG. 7 is a diagram illustrating machine learning.
FIG. 8 is a graph showing a difference between a system conversion efficiency and a specific conversion efficiency in accordance with a supply power amount.

### DETAILED DESCRIPTION

One preferred embodiment of a power management system including a power management device disclosed here will be described with reference to the drawings. The preferred embodiment described here is, of course, not intended to particularly limit the present teaching. The present teaching is not limited to the embodiment disclosed here unless otherwise specified. Members and parts having the same functions are denoted by the same reference numerals as appropriate, and description for the same members and parts will not be repeated as appropriate.

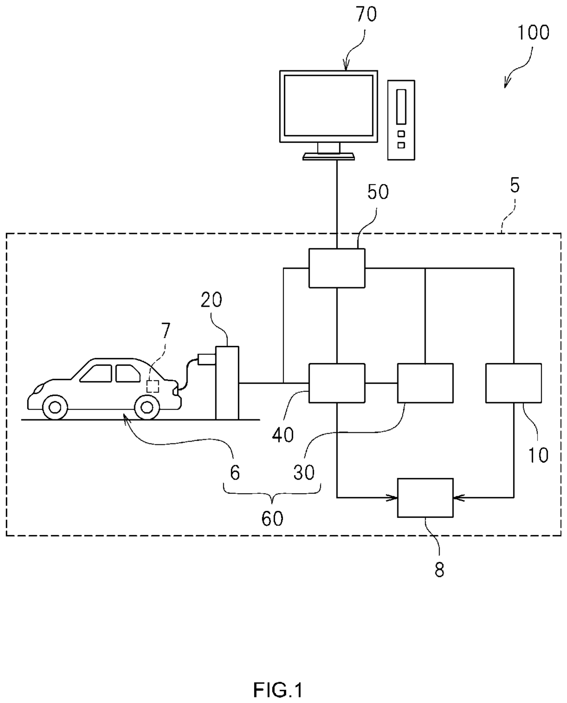

FIG. 1 is a conceptual view illustrating a power management system 100 according to this preferred embodiment. The power management system 100 according to this preferred embodiment is a system that manages electric power consumed in an owned facility 5 owned by a user. The user as used herein is a customer of a management company that manages the power management system 100, and is a user registered in the power management system 100.

The owned facility 5 is a facility owned by a user. In this example, the owned facility 5 is a facility used by a user. For example, the owned facility 5 is a house owned by a user. The term "house" as used herein is not particularly limited with regard to whether or not the user resides therein. For example, the house may be a residence (in other words, a building) for the user, or may be a rental house. The owned facility 5 is not limited to a house. The owned facility 5 may be, for example, a building of an office or a company operated by the user.

In this preferred embodiment, the power management system 100 is implemented by, for example, a client server system. Alternatively, the power management system 100 may be implemented by cloud computing. As illustrated in FIG. 1, the power management system 100 includes a load 8, a system power supply 10, a charging/discharging device 20, a renewable energy power generation device 30, a power storage device 40, an owned controller 50, and a power management device 70.

The load 8 consumes electric power. The load 8 uses, for example, electric power as a driving source. The type of the load 8 is not particularly limited. The load 8 is, for example, a household electrical appliance such as a television, a refrigerator, or a vacuum cleaner. In this example, the load 8 is located in the owned facility 5. The load 8 can be a plurality of loads. The load 8 is supplied with electric power via a so-called plug socket located in a building in the owned facility 5, for example.

The system power supply 10 supplies electric power. The system power supply 10 is, for example, a supply source that supplies electric power from a commercial system (e.g., electric power company). The electric power supplied from the system power supply 10 is electric power purchased by a user, that is, so-called purchased electric power.

The charging/discharging device 20 charges and discharges an electric vehicle 6. The electric vehicle 6 is, for example, a vehicle owned or used by a user. A secondary battery 7 is mounted on the electric vehicle 6. The secondary battery 7 can be repeatedly charged and discharged by movement of charge carriers between a pair of electrodes (e.g., a positive electrode and a negative electrode) via an electrolyte, for example. As the secondary battery 7, a battery such as a lithium ion secondary battery or a nickel hydrogen battery may be used. In this preferred embodiment, the secondary battery 7 is a lithium ion secondary battery. In this example, the electric vehicle 6 is a vehicle using the secondary battery 7 as a driving source. The electric vehicle 6 is an electric vehicle using electric power of an battery electric vehicle, a hybrid electric vehicle, or a plug-in hybrid electric vehicle as a driving source. The electric vehicle 6 may be a four-wheeled vehicle or a two-wheeled vehicle. Charging and discharging of the electric vehicle 6 herein refer to charging and discharging of the secondary battery 7 mounted on the electric vehicle 6.

The charging/discharging device 20 is installed in, for example, a parking lot of the owned facility 5. The charging/discharging device 20 charges and discharges the electric vehicle 6 (specifically the secondary battery 7 mounted on the electric vehicle 6) parked in a parking lot. For example, the charging/discharging device 20 includes a connection plug (not shown) to be connected to the electric vehicle 6. The charging/discharging device 20 connects the connection plug to the electric vehicle 6 so that the charging/discharging device 20 can charge and discharge the electric vehicle 6 connected to the connection plug. The number of charging/discharging devices 20 used in the owned facility 5 is not particularly limited. In this preferred embodiment, one charging/discharging device 20 is used in the owned facility 5, but a plurality of charging/discharging devices 20 may be used.

The renewable energy power generation device 30 generates electric power by renewable energy. Electric power generated by renewable energy herein will also be referred to as renewable energy power. Examples of an energy source of the renewable energy include sunlight, wind power, water power, geothermal heat, solar heat, heat existing in the atmosphere or in nature, and biomass. An energy source of the renewable energy by the renewable energy power generation device 30 is not particularly limited. In this preferred embodiment, the renewable energy power generation device 30 is a solar power generation device using sunlight as an energy source. The renewable energy power generation device 30 herein includes a solar panel (not shown) that receives sunlight. The renewable energy power generation device 30 is, for example, installed in the owned facility 5 or owned by a user.

In this preferred embodiment, a power supply source installed separately from the system power supply 10 is referred to as a specific power supply 60. The power management system 100 includes the specific power supply 60. The specific power supply 60 is a supply source that supplies electric power obtained by a method different from the system power supply 10. The electric power supplied from the specific power supply 60 is different from, for example, purchased electric power purchased from an electric power company. In this preferred embodiment, the specific power supply 60 includes the electric vehicle 6 connected to the charging/discharging device 20, and the renewable energy power generation device 30. Discharging from the electric vehicle 6 will be hereinafter referred to as discharging from the electric vehicle 6 connected to the charging/discharging device 20. The specific power supply 60 includes the electric vehicle 6 and the renewable energy power generation device 30. Electric power supplied from the specific power supply 60 herein may be electric power discharged from the electric vehicle 6 through the charging/discharging device 20 or renewable energy power (solar power in this example) generated by the renewable energy power generation device 30. The number of specific power supplies 60 included in the power management system 100 is not particularly limited. The number of specific power supplies 60 herein is two, that is, the electric vehicle 6 and the renewable energy power generation device 30, but may be three or more. The number of the specific power supplies 60 may be one, that is, one of the electric vehicle 6 and the renewable energy power generation device 30. That is, any one of the electric vehicle 6 and the renewable energy power generation device 30 may be omitted.

The power storage device 40 stores electric power. The power storage device 40 is connected to, for example, the charging/discharging device 20 and the renewable energy power generation device 30. Electric power discharged from the electric vehicle 6 to the charging/discharging device 20 is stored in the power storage device 40. Renewable energy power generated by the renewable energy power generation device 30 is stored in the power storage device 40. The power storage device 40 may be connected to the system power supply 10. The power storage device 40 may store electric power supplied from the system power supply 10. The number of power storage devices 40 may be one or more. For example, in a case where a plurality of power storage devices 40 are used, electric power discharged from the electric vehicle 6, electric power generated by the renewable energy power generation device 30, and electric power supplied from the system power supply 10 may be stored in different power storage devices 40, respectively.

The owned controller 50 controls supply of electric power in the owned facility 5. The owned controller 50 controls supply of electric power from the system power supply 10, electric power discharged from the electric vehicle 6, and electric power generated by the renewable energy power generation device 30, to the load 8. The owned controller 50 controls supply of electric power stored in the power storage device 40 to the load 8. In supplying electric power to the load 8, the owned controller 50 controls, for example, selection of the power supply source (e.g., the system power supply 10, the electric vehicle 6 connected to the charging/discharging device 20, or the renewable energy power generation device 30), the amount of electric power supplied to the load 8, and the timing of supplying electric power to the load 8. The owned controller 50 is a generic term for a so-called smart meter (an electronic watt-hour meter that has the function of measuring electric power digitally and a communication function), a power conditioner for the charging/discharging device 20, a power conditioner for the renewable energy power generation device 30, and a power conditioner for the power storage device 40, and is a controller that integrates these power conditioners.

As illustrated in FIG. 1, the owned controller 50 is communicably connected to, for example, the system power supply 10, the charging/discharging device 20, the renewable energy power generation device 30, and the power storage device 40. The configuration of the owned controller 50 is not particularly limited. The owned controller 50 is, for example, a microcomputer. The owned controller 50 includes, for example, an I/F, a CPU, a ROM, and a RAM. The owned controller 50 may be implemented by a single computer or a plurality of computers. The owned controller 50 may be implemented by, for example, a personal computer.

The power management device 70 manages electric power supplied to the owned facility 5 (e.g., the load 8). For example, in a case where the power management system 100 is implemented by cloud computing, the power management device 70 functions as a so-called cloud server. For example, in a case where the power management system 100 is implemented by a client server system, the power management device 70 functions as a server. The power management device 70 includes, for example, an I/F, a CPU, a ROM, and a RAM. The power management device 70 may be implemented by a single computer (e.g., a single server) or a plurality of computers (e.g., a plurality of servers).

In this preferred embodiment, as illustrated in FIG. 1, the power management device 70 is communicably connected to the owned controller 50 of the owned facility 5. The electric power management device 70 herein is connected to the owned controller 50 via the Internet. For example, the power management device 70 is configured or programmed to transmit and receive information to/from the owned controller 50. The power management device 70 may be communicably connected to the electric vehicle 6, the system power supply 10, the charging/discharging device 20, the renewable energy power generation device 30, and the power storage device 40.

The configuration of the power management system 100 according to this preferred embodiment has been described above. Electric power supplied from the system power supply 10 is, for example, purchased electric power purchased from an electric power company. On the other hand, renewable energy power generated by the renewable energy power generation device 30 is reasonable compared to electric power supplied from the system power supply 10. Electric power charged to the electric vehicle 6 is electric power already purchased, and thus, there will be no cost even if the power is consumed in the future. Therefore, in the owned facility 5 that owns the specific power supply 60 such as the electric vehicle 6 and the renewable energy power generation device 30, electric power consumed by the load 8 is preferably from the specific power supply 60 as much as possible. In view of this, in this preferred embodiment, the power management device 70 manages electric power so that the load 8 consumes power from the specific power supply 60 rather than from the system power supply 10.

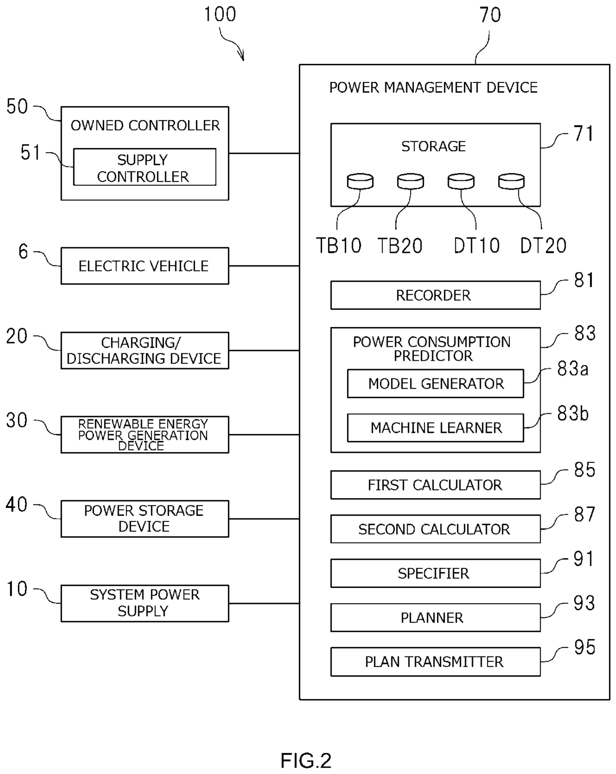

FIG. 2 is a block diagram of the power management system 100 according to this preferred embodiment. In this preferred embodiment, as illustrated in FIG. 2, the power management device 70 includes a storage 71, a recorder 81, a power consumption predictor 83, a first calculator 85, a second calculator 87, a specifier 91, a planner 93, and a plan transmitter 95. Each section constituting the power management device 70 may be implemented by software or may be implemented by hardware. Each section constituting the power management device 70 may be implemented by one or more processors, or may be implemented by circuitry.

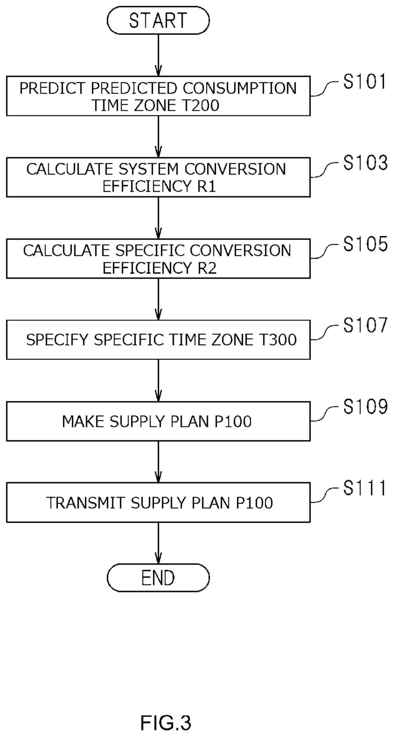

In this preferred embodiment, a supply plan P100 (see FIG. 3) showing which of the system power supply 10 and the specific power supply 60 supplies electric power to the load 8 is made in an arbitrary time zone. A procedure of making the supply plan P100 will be described below with reference to the flowchart of FIG. 3.

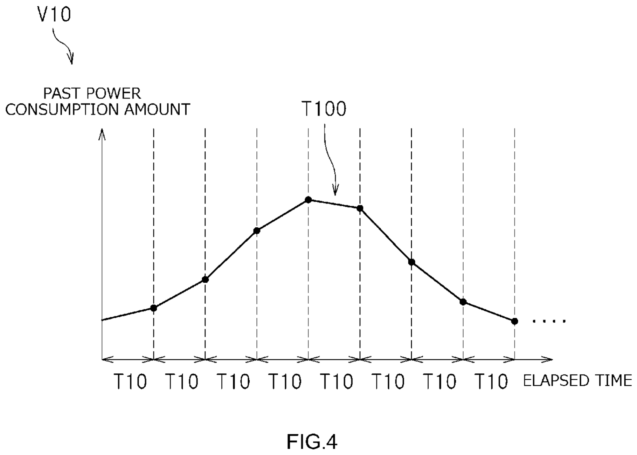

FIG. 4 is a graph showing an example of a past consumption time zone T100. In this preferred embodiment, prior to the making of the supply plan P100, the recorder 81 in FIG. 2 records the past consumption time zone T100 (see FIG. 4). The past consumption time zone T100 herein is data recording a past power consumption amount V10 of the load 8 for every past elapsed time T10 that is a time that has elapsed previously. The past elapsed time T10 is a duration of time between at an arbitrary time and another time. Although a specific numerical value of the past elapsed time T10 is not particularly limited, the past elapsed time T10 is one hour, for example. The past power consumption amount V10 is the amount of electric power actually consumed by the load 8 in the past elapsed time T10 (e.g., one hour). The recorder 81 records the past power consumption amount V10 for every past elapsed time T10.

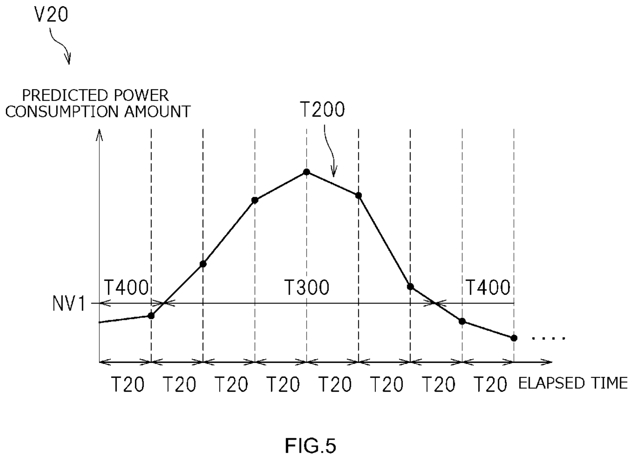

The time length (referred to as a period) of the past consumption time zone T100 is not particularly limited. Based on the past consumption time zone T100, a predicted consumption time zone T200 (see FIG. 5) is predicted, which will be described in detail later. For example, if the period of the past consumption time zone T100 is long, the predicted consumption time zone T200 is accurately predicted, but a processing time may be required. Thus, the period of the past consumption time zone T100 is preferably set in consideration of the accuracy of the predicted consumption time zone T200 and the processing time for predicting the predicted consumption time zone T200. The past consumption time zone T100 may include weather information for every past elapsed time T10. Examples of the weather information include weather (sunny, rainy, cloudy, etc.), temperature, and precipitation for every past elapsed time T10.

For example, the past consumption time zone T100 (the past power consumption amount V10 of the load 8 for every past elapsed time T10) is recorded and stored in the owned controller 50 (see FIG. 1) in the owned facility 5. Thus, the owned controller 50 transmits the stored past consumption time zone T100 to the power management device 70. The recorder 81 acquires the past consumption time zone T100 transmitted from the owned controller 50. The past power consumption amount V10 for every past elapsed time T10 recorded by the recorder 81, that is, the past consumption time zone T100, is stored in the storage 71.

In this preferred embodiment, in the state where the past consumption time zone T100 is recorded by the recorder 81, the flowchart in the FIG. 3 is sequentially executed. First, in step S101 in FIG. 3, the power consumption predictor 83 in FIG. 2 predicts the predicted consumption time zone T200. FIG. 5 is a graph showing an example of the predicted consumption time zone T200. As shown in FIG. 5, the predicted consumption time zone T200 herein indicates a predicted power consumption amount V20 of the load 8 for every future elapsed time T20. The future elapsed time T20 is a time to elapse in future. A specific numerical value of the future elapsed time T20 is equal to the past elapsed time T10 described above, and is, for example, every one hour. The predicted power consumption amount V20 is the amount of electric power predicted to be consumed by the load 8 in the future elapsed time T20 (e.g., one hour).

The method by which the power consumption predictor 83 predicts the predicted consumption time zone T200 is not particularly limited. In this preferred embodiment, the power consumption predictor 83 predicts the predicted consumption time zone T200 based on the past power consumption amount V10 (i.e., the past consumption time zone T100) for every past elapsed time T10 recorded by the recorder 81. The power consumption predictor 83 predicts the predicted consumption time zone T200 by machine learning. In this preferred embodiment, as shown in FIG. 2, the power consumption predictor 83 includes a model generator 83a and a machine leaner 83b.

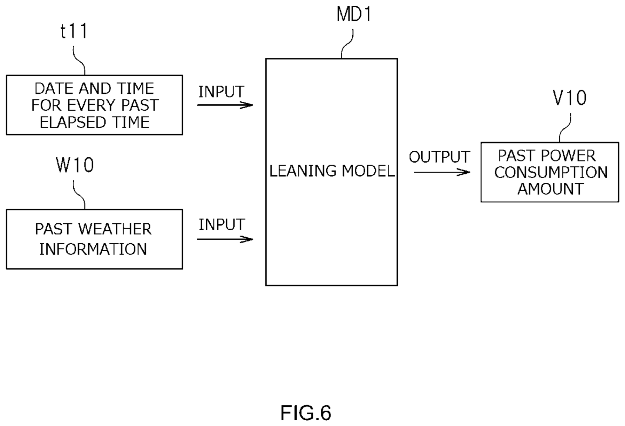

FIG. 6 is a diagram showing an example of a leaning model MD1 generated by machine learning. The model generator 83a herein generates the leaning model MD1 as shown in FIG. 6. In this example, the model generator 83a generates the leaning model MD1 using the past consumption time zone T100 as training data. For example, while a user stays in the owned facility 5, power consumption of the load 8 may be large. Depending on the user, there may be a time zone in which power consumption of the load 8 is large and a time zone in which power consumption of the load 8 is small in a time zone of one day. For example, depending on the user, power consumption of the load 8 may be larger in the morning or night than in the daytime or midnight. That is, there can be a correlation between a date and time t11 for every past elapsed time T10 and the past power consumption amount V10. For example, the model generator 83a generates the leaning model MD1 using the date and time t11 for every past elapsed time T10 as an input and the past power consumption amount V10 in the date and time t11 for every past elapsed time T10 as an output, in the past consumption time zone T100.

As shown in FIG. 6, data input to the leaning model MD1 may be the date and time t11 for every past elapsed time T10 and past weather information W10. For example, in a day when the temperature is low and a day when the temperature is high, the power consumption amount of the load 8 (e.g., air conditioner) may be large. Therefore, the past weather information W10 and the past power consumption amount V10 may have a correlation. In view of this, in this preferred embodiment, the model generator 83a may generate the leaning model MD1 using the date and time t11 for every past elapsed time T10 and the past weather information W10 for every past elapsed time T10 in the past consumption time zone T100 as inputs and using the past power consumption amount V10 for every past elapsed time T10 as an output. In generating the leaning model MD1, the past weather information W10 may be omitted.

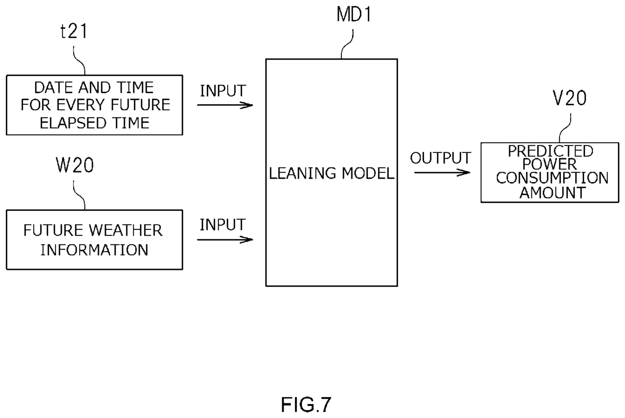

FIG. 7 is a diagram illustrating machine learning. Then, as illustrated in FIG. 7, the machine leaner 83b outputs the predicted power consumption amount V20 at a date and time t21 for every future elapsed time T20. Using the leaning model MD1, the machine leaner 83b inputs the date and time t21 for every future elapsed time T20 to the leaning model MD1, and outputs the predicted power consumption amount V20. The predicted power consumption amount V20 output from the leaning model MD1 serves as a predicted power consumption amount for every future elapsed time T20. In a case where the past weather information W10 is used as shown in FIG. 6 as input data to the leaning model MD1 generated by the model generator 83a, the machine leaner 83b may input the date and time t21 for every future elapsed time T20 and future weather information W20 to the leaning model MD1 and output the predicted power consumption amount V20, as illustrated in FIG. 7. The future weather information W20 can be acquired from a weather information provider that provides weather information, for example. The power consumption predictor 83 herein acquires the future weather information W20 for every future elapsed time T20 from a server managed by the weather information provider. In a case where the past weather information W10 is omitted in FIG. 6, the future weather information W20 is omitted in FIG. 7.

In this preferred embodiment, the model generator 83a may add the predicted power consumption amount V20 for every future elapsed time T20 output form the machine leaner 83b to the training data to generate a new leaning model MD1. In a case where the past consumption time zone T100 is updated and there exists the past power consumption amount V10 of the load 8 for every past elapsed time T10 newly added to the past consumption time zone T100, the model generator 83a may add the past power consumption amount V10 of the load 8 for every newly added past elapsed time T10 to the training data to generate a new leaning model MD1.

In this preferred embodiment, the power consumption predictor 83 can create the predicted consumption time zone T200 with the predicted power consumption amount V20 for every future elapsed time T20 obtained from the machine learning. The predicted consumption time zone T200 predicted by the power consumption predictor 83 is stored in the storage 71.

Subsequently, in step S103 in FIG. 3, the first calculator 85 in FIG. 2 calculates a system conversion efficiency R1 in the system power supply 10. The system conversion efficiency R1 is an efficiency in converting electric power output from the system power supply 10 to electric power to be supplied to the load 8. The system conversion efficiency R1 is, for example, a proportion of the amount of electric power actually supplied to the load 8 with respect to the amount of electric power output from the system power supply 10. If the system conversion efficiency R1 is high, this means that a power conversion loss is small, and electric power is efficiently supplied to the load 8. On the other hand, if the system conversion efficiency R1 is low, this means that a power conversion loss is large, and electric power is not efficiently supplied to the load 8. The system conversion efficiency R1 is calculated in accordance with a system supply power amount that is a supply power amount output from the system power supply 10 at a time. The system supply power amount is the amount of electric power supplied form the system power supply 10 per a unit time. For example, if the system supply power amount is large, the system conversion efficiency R1 tends to be high, whereas if the system supply power amount is small, the system conversion efficiency R1 tends to be low. In this preferred embodiment, the storage 71 stores a system efficiency conversion table TB10 indicating the system conversion efficiency R1 in accordance with a system supply power amount (see FIG. 2) beforehand. The first calculator 85 calculates the system conversion efficiency R1 by applying the system supply power amount to the system efficiency conversion table TB10. The first calculator 85 herein calculates the system conversion efficiency R1 for every system supply power amount.

In this preferred embodiment, the first calculator 85 calculates the system conversion efficiency R1 for every future elapsed time T20 in the predicted consumption time zone T200. The first calculator 85 herein assumes a case where the system supply power amount equal to the predicted power consumption amount V20 is supplied from the system power supply 10 to the load 8, and calculates the system conversion efficiency R1 for every future elapsed time T20. The first calculator 85 calculates the system conversion efficiency R1 such that as the predicted power consumption amount V20 increases, the system conversion efficiency R1 increases. The system conversion efficiency R1 for every future elapsed time T20 calculated by the first calculator 85 is stored in the storage 71.

Subsequently, in step S105 in FIG. 3, the second calculator 87 in FIG. 2 calculates a specific conversion efficiency R2 in the specific power supply 60 (the specific power supply 60 including the renewable energy power generation device 30 and the electric vehicle 6 in this example). The specific conversion efficiency R2 is an efficiency in converting electric power output from the specific power supply 60 to electric power to be supplied to the load 8. The specific conversion efficiency R2 is, for example, a proportion of the amount of electric power actually supplied to the load 8 with respect to the amount of electric power output from the specific power supply 60. In a case where a plurality of specific power supplies 60 are used as in this preferred embodiment, the average of conversion efficiencies in the specific power supplies 60 may be the specific conversion efficiency R2. In this example, if the specific conversion efficiency R2 is high, this means that a power conversion loss is small, and electric power is efficiently supplied to the load 8 from the specific power supplies 60. On the other hand, if the specific conversion efficiency R2 is low, this means that a power conversion loss is large, and electric power is not efficiently supplied to the load 8 from the specific power supplies 60. The specific conversion efficiency R2 is calculated in accordance with a specific supply power amount that is a supply power amount output from the specific power supplies 60 at a time. The specific supply power amount is the amount of electric power supplied from the specific power supplies 60 per a unit time. Similarly to the system conversion efficiency R1, if the specific supply power amount is large, the specific conversion efficiency R2 tends to be high, whereas if the specific supply power amount is small, the specific conversion efficiency R2 tends to be low. In this preferred embodiment, the storage 71 stores a specific efficiency conversion table TB20 indicating a specific conversion efficiency R2 in accordance with the specific supply power amount (see FIG. 2) beforehand. The second calculator 87 calculates the specific conversion efficiency R2 by applying the specific supply power amount to the specific efficiency conversion table TB20. The second calculator 87 herein calculates the specific conversion efficiency R2 for every specific supply power amount

In this preferred embodiment, the second calculator 87 calculates the specific conversion efficiency R2 for every future elapsed time T20 in the predicted consumption time zone T200. The second calculator 87 herein assumes a case where the specific supply power amount equal to the predicted power consumption amount V20 is supplied from the specific power supply 60 to the load 8, and calculates the specific conversion efficiency R2 for every future elapsed time T20. The second calculator 87 calculates the specific conversion efficiency R2 such that as the predicted power consumption amount V20 increases, the specific conversion efficiency R2 increases. The specific conversion efficiency R2 for every future elapsed time T20 calculated by the second calculator 87 is stored in the storage 71.

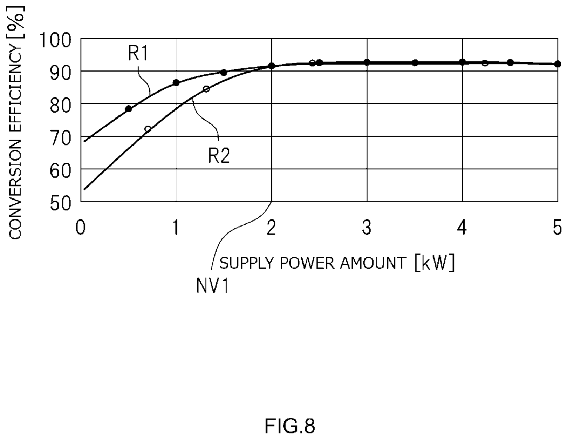

In this preferred embodiment, the system efficiency conversion table TB10 shown in FIG. 2 is different from the specific efficiency conversion table TB20. That is, even with the same supply power amount, the system conversion efficiency R1 may be different from the specific conversion efficiency R2. FIG. 8 is a graph showing a difference between the system conversion efficiency R1 and the specific conversion efficiency R2 in accordance with the amount of the supply power amount. In this example, as shown in FIG. 8, if the supply power amount is small (e.g., less than a reference power amount NV1), the system conversion efficiency R1 is higher than the specific conversion efficiency R2. On the other hand, if the supply power amount is large (e.g., greater than or equal to the reference power amount NV1), the specific conversion efficiency R2 is approximately equal to the system conversion efficiency R1 or higher than the system conversion efficiency R1. Thus, if the amount of electric power to be supplied to the load 8 (predicted power consumption amount V20), for example, is less than the reference power amount NV1, electric power is expected to be more efficiently supplied in the case of supplying electric power from the system power supply 10 to the load 8 than in the case of supplying electric power from the specific power supply 60. On the other hand, if the amount of electric power to be supplied to the load 8 (predicted power consumption amount V20) is greater than or equal to the reference power amount NV1, electric power is expected to be more efficiently supplied in the case of supplying from the specific power supply 60 to the load 8 than in the case of supplying from the system power supply 10. The reference power amount NV1 herein is the amount of electric power serving as a criteria in determining which one of the system conversion efficiency R1 and the specific conversion efficiency R2 is higher.

Then, in step S107 in FIG. 3, the specifier 91 in FIG. 2 specifies a specific time zone T300 from the predicted consumption time zone T200. The specific time zone T300 refers to a time zone in which electric power output from the specific power supply 60 is supplied to the load 8. In other words, in a system time zone T400 (see FIG. 5) excluding the specific time zone T300 in the predicted consumption time zone T200, electric power output from the system power supply 10 is supplied to the load 8. The method for specifying the specific time zone T300 is not particularly limited.

In this preferred embodiment, the specifier 91 specifies the specific time zone T300 from the predicted consumption time zone T200 based on the system conversion efficiency R1 and the specific conversion efficiency R2 for every future elapsed time T20. The specifier 91 compares the system conversion efficiency R1 and the specific conversion efficiency R2 with respect to the predicted power consumption amount V20 for every future elapsed time T20. Then, the specifier 91 specifies, as the specific time zone T300, a time zone corresponding to the future elapsed time T20 in which the specific conversion efficiency R2 is greater than or equal to the system conversion efficiency R1 in the predicted consumption time zone T200. A time zone corresponding to the future elapsed time T20 in which the specific conversion efficiency R2 is less than the system conversion efficiency R1 is not included in the specific time zone T300. The specifier 91 herein specifies, as the system time zone T400, a time zone corresponding to the future elapsed time T20 in which the specific conversion efficiency R2 is less than the system conversion efficiency R1 in the predicted consumption time zone T200.

If the specific conversion efficiency R2 is greater than or equal to the system conversion efficiency R1 as described above, the supply power amount to the load 8 is greater than or equal to the reference power amount NV1. Thus, as shown in FIG. 5, the specifier 91 specifies, as the specific time zone T300, the time zone in which the predicted power consumption amount V20 is greater than or equal to the reference power amount NV1 in the predicted consumption time zone T200. If the specific conversion efficiency R2 is less than the system conversion efficiency R1 as described above, the supply power amount to the load 8 is less than the reference power amount NV1. Thus, as shown in FIG. 5, the specifier 91 specifies, as the system time zone T400, a time zone in which the predicted power consumption amount V20 is less than the reference power amount NV1 in the predicted consumption time zone T200. Information on the specific time zone T300 and the system time zone T400 specified by the specifier 91 is stored in the storage 71.

Thereafter, in step S109 in FIG. 3, the planner 93 in FIG. 2 makes the supply plan P100. The supply plan P100 is a plan indicating which of the system power supply 10 and the specific power supply 60 supplies electric power to the load 8. The supply plan P100 is a plan indicating which of the system power supply 10 and the specific power supply 60 supplies electric power for every future elapsed time T20 in the predicted consumption time zone T200 such that electric power in the predicted power consumption amount V20 is supplied from the specific power supply 60 to the load 8 in the specific time zone T300. In other words, the supply plan P100 is a plan for controlling the specific power supply 60 such that by a date and time for every future elapsed time T20 in the specific time zone T300, a power storage amount of the specific power supply 60 reaches a power storage amount of the predicted power consumption amount V20 or more corresponding to the date and time. The power storage amount of the specific power supply 60 herein is, for example, a power storage amount of the power storage device 40 that stores electric power generated by the renewable energy power generation device 30 and electric power discharged from the electric vehicle 6.

In this preferred embodiment, the amount of electric power that can be generated by the renewable energy power generation device 30 and the amount of electric power that can be discharged from the electric vehicle 6 may be different for every future elapsed time T20. In view of this, the planner 93 acquires predicted vehicle SOC data DT10 (see FIG. 2) and predicted renewable energy power amount data DT20 (see FIG. 2). The predicted vehicle SOC data DT10 is a state of charge (SOC, charged state) of the secondary battery 7 mounted on the electric vehicle 6 for every future elapsed time T20. The SOC is an index indicating a battery capacity when a fully charged state of the secondary battery 7 is 100% and a fully discharged state is 0%. The method for predicting the predicted vehicle SOC data DT10 is not particularly limited, and any conventional method may be employed. For example, the planner 93 predicts the predicted vehicle SOC data DT10 by machine learning based on past traveling data of the electric vehicle 6. This traveling data is data in which a traveling distance for every past elapsed time T10 is associated with the SOC and other properties. In this example, the SOC leaning model is generated using the traveling data as training data, the traveling distance for every past elapsed time T10 as an input, for example, and an SOC of the electric vehicle 6 for every past elapsed time T10 as an output. Then, a traveling distance for every future elapsed time T20 is input to the SOC leaning model, and an SOC of the electric vehicle 6 for every future elapsed time T20 is output. The traveling distance for every future elapsed time T20 may be estimated from past traveling data or may be estimated from destination information input from a user. In this manner, the predicted vehicle SOC data DT10 is predicted. The predicted vehicle SOC data DT10 is stored in the storage 71, as shown in FIG. 2. Thus, the planner 93 can acquire the predicted vehicle SOC data DT10 from the storage 71.

The predicted renewable energy power amount data DT20 is the amount of renewable energy power generated by the renewable energy power generation device 30 for every future elapsed time T20. The method for predicting the predicted renewable energy power amount data DT20 is not particularly limited, and any conventional method may be employed. For example, the planner 93 predicts the predicted renewable energy power amount data DT20 by machine learning based on past renewable energy power amount data. The past renewable energy power amount data herein is data in which the amount of electric power generated by the renewable energy power generation device 30 for every past elapsed time T10 is associated with weather information at this time. The past renewable energy power amount data is stored in the owned controller 50, for example. Thus, the planner 93 can acquire the past renewable energy power amount data from the owned controller 50. In this example, a renewable energy leaning model is generated using the past renewable energy power amount data as training data, the past weather information W10 for every past elapsed time T10 as an input, and the renewable energy power amount for every past elapsed time T10 as an output. Then, the future weather information W20 for every future elapsed time T20 is input to the renewable energy leaning model, and a renewable energy power amount for every future elapsed time T20 is output. In this manner, the predicted renewable energy power amount data DT20 is predicted. The predicted renewable energy power amount data DT20 is stored in the storage 71, as shown in FIG. 2. Thus, the planner 93 can acquire the predicted renewable energy power amount data DT20 from the storage 71.

In this preferred embodiment, the planner 93 makes the supply plan P100 based on the predicted vehicle SOC data DT10 and the predicted renewable energy power amount data DT20 such that by a date and time for every future elapsed time T20 in the specific time zone T300, the power storage amount of the power storage device 40 reaches the predicted power consumption amount V20 or more corresponding to this date and time. In this example, in a case where electric component in the predicted power consumption amount V20 can be obtained from renewable energy power (e.g., predicted renewable energy power amount ≥ predicted power consumption amount V20), for example, the supply plan P100 is made such that electric power corresponding to the predicted power consumption amount V20 generated by the renewable energy power generation device 30 is supplied to the power storage device 40 by the corresponding date and time. In a case where electric power of the predicted power consumption amount V20 cannot be obtained from renewable energy power (e.g., predicted renewable energy power amount < predicted power consumption amount V20), for example, it is determined whether the remaining predicted power consumption amount V20 can be obtained from electric power discharged from the electric vehicle 6 (e.g., whether predicted renewable energy power amount + predicted vehicle discharge amount ≥ predicted power consumption amount V20). If the electric power can be obtained (predicted renewable energy power amount + predicted vehicle discharge amount ≥ predicted power consumption amount V20), the supply plan P100 is made such that electric power corresponding to the predicted power consumption amount V20 is supplied to the power storage device 40 using electric power generated by the renewable energy power generation device 30 and electric power discharged from the electric vehicle 6 by the corresponding date and time. If it is expected that electric power corresponding to the predicted power consumption amount V20 cannot be obtained using the electric power generated by the renewable energy power generation device 30 and electric power discharged from the electric vehicle 6 by the corresponding date and time (predicted renewable energy power amount + predicted vehicle discharge amount < predicted power consumption amount V20), the supply plan P100 is made such that electric power corresponding to the remaining predicted power consumption amount V20 is obtained from electric power supplied from the system power supply 10. For electric power supplied from the system power supply 10, a price is set beforehand for every elapsed time. Thus, in the case of using electric power from the system power supply 10, the supply plan P100 is preferably optimized to use a relatively inexpensive time zone. The supply plan P100 is made such that electric power is supplied from the system power supply 10 to the load 8 in the system time zone T400.

In making the supply plan P100, it is possible to use a prediction algorithm such as an autoregressive integrated moving average model or a recurrent neural network, or an optimization algorithm such as a mixed-integer linear programming (MILP) algorithm.

After the supply plan P100 has been made by the planner 93 in the manner described above, the process proceeds to step S111 in FIG. 3. In step S111, the plan transmitter 95 in FIG. 2 transmits the supply plan P100 to the owned controller 50.

The owned controller 50 receives the supply plan P100. In this preferred embodiment, as illustrated in FIG. 2, the owned controller 50 includes a supply controller 51. After the owned controller 50 has received the supply plan P100, based on the supply plan P100, the supply controller 51 of the owned controller 50 controls the power storage device 40 such that electric power stored in the power storage device 40 is supplied to the load 8 at a timing at which electric power from the specific power supply 60 is consumed by the load 8 (specific time zone T300). The supply controller 51 controls the charging/discharging device 20 to discharge from the electric vehicle 6 at a timing of discharge from the electric vehicle 6, based on the supply plan P100. Based on the supply plan P100, the supply controller 51 controls the system power supply 10 such that electric power supplied from the system power supply 10 is supplied to the load 8 at a timing of supplying electric power from the system power supply 10 (e.g., the system time zone T400 in the predicted consumption time zone T200).

In the foregoing manner, in this preferred embodiment, the power management system 100 includes the system power supply 10 that supplies electric power, the specific power supply 60 installed separately from the system power supply 10, and the power management device 70, as illustrated in FIG. 1. As illustrated in FIG. 2, the power management device 70 includes the recorder 81, the power consumption predictor 83, the first calculator 85, the second calculator 87, the specifier 91, and the planner 93. As illustrated in FIG. 4, the recorder 81 records the past power consumption amount V10 of the load 8 for every past elapsed time T10 that is a time that has elapsed previously. Based on the past power consumption amount V10 for every past elapsed time T10 recorded in the recorder 81, the power consumption predictor 83 creates the predicted consumption time zone T200 in which the predicted power consumption amount V20 of the load 8 for every future elapsed time T20 that is a time to elapse in future is predicted (see FIG. 5). The first calculator 85 calculates the system conversion efficiency R1 that is a conversion efficiency of electric power for every future elapsed time T20 in the case of supplying the predicted power consumption amount V20 for every future elapsed time T20 from the system power supply 10 to the load 8, in the predicted consumption time zone T200 (see step S103 in FIG. 3). The second calculator 87 calculates the specific conversion efficiency R2 that is a conversion efficiency of electric power for every future elapsed time T20 in the case of supplying the predicted power consumption amount V20 for every future elapsed time T20 from the specific power supply 60 to the load 8, in the predicted consumption time zone T200 (see step S105 in FIG. 3). As described in step S107 in FIG. 3, the specifier 91 specifies, as the specific time zone T300, a time zone in which the specific conversion efficiency R2 is greater than or equal to the system conversion efficiency R1 in the predicted consumption time zone T200. As described in step S109 in FIG. 3, the planner 93 makes the supply plan P100 indicating which of the system power supply 10 and the specific power supply 60 supplies electric power for every future elapsed time T20 in the predicted consumption time zone T200 such that electric power in the predicted power consumption amount V20 is supplied from the specific power supply 60 to the load 8 for every future elapsed time T20 in the specific time zone T300.

In this preferred embodiment, in the time zone in which the specific conversion efficiency R2 is greater than or equal to the system conversion efficiency R1, power supply efficiency is higher in the case of supplying electric power from the specific power supply 60 to the load 8 than in the case of supplying from the system power supply 10. On the other hand, in a time zone in which the specific conversion efficiency R2 is less than the system conversion efficiency R1, power supply efficiency is higher in the case of supplying electric power from the system power supply 10 to the load 8 than in the case of supplying from the specific power supply 60. Accordingly, in the specific time zone T300 in which the specific conversion efficiency R2 is greater than or equal to the system conversion efficiency R1 in the predicted consumption time zone T200, electric power is efficiently supplied to the load 8 by supplying electric power from the specific power supply 60 to the load 8. The owned controller 50 performs control such that electric power is supplied to the load 8 based on the supply plan P100 made by the planner 93, thereby efficiently supplying electric power to the load 8.

In this preferred embodiment, the first calculator 85 calculates the system conversion efficiency R1 such that as the predicted power consumption amount V20 increases, the system conversion efficiency R1 increases. The second calculator 87 calculates the specific conversion efficiency R2 such that as the predicted power consumption amount V20 increases, the specific conversion efficiency R2 increases. In this manner, the system conversion efficiency R1 and the specific conversion efficiency R2 can be lower as the amount of electric power (the predicted power consumption amount V20 in this example) output at a time decreases. Thus, the system conversion efficiency R1 and the specific conversion efficiency R2 can be calculated in accordance with the amount of electric power output at a time.

In this preferred embodiment, as shown in FIG. 8, when the predicted power consumption amount V20 (e.g., supply power amount) is less than the predetermined reference power amount NV1, the system conversion efficiency R1 is higher than the specific conversion efficiency R2. When the predicted power consumption amount V20 is greater than or equal to the reference power amount NV1, the specific conversion efficiency R2 is greater than or equal to the system conversion efficiency R1. As shown in FIG. 5, the specifier 91 specifies, as the specific time zone T300, the time zone in which the predicted power consumption amount V20 is greater than or equal to the reference power amount NV1 in the predicted consumption time zone T200. In this manner, using the reference power amount NV1 as a criterion, the specific time zone T300 in which electric power is supplied from the specific power supply 60 to the load 8 can be specified.

In this preferred embodiment, as illustrated in FIG. 2, the power consumption predictor 83 includes the model generator 83a and the machine learner 83b. As illustrated in FIG. 6, the model generator 83a generates the leaning model MD1 using the past power consumption amount V10 for every past elapsed time T10 as training data, the date and time t11 for every past elapsed time T10 as an input, and the past power consumption amount V10 for every past elapsed time T10 as an output. As illustrated in FIG. 7, the machine leaner 83b inputs the date and time t21 for every future elapsed time T20 to the leaning model MD1 and outputs the predicted power consumption amount V20 for every future elapsed time T20, in the predicted consumption time zone T200. For example, a user often has the same daily (e.g., weekday) life cycle, and the time zone during which the user stays in the owned facility 5 may be the same. The electric power consumption of the load 8 may be large in the time zone during which the user is staying. Therefore, by performing machine learning based on the past power consumption amount V10 for every past elapsed time T20, it becomes easier to predict the predicted power consumption amount V20 for every future elapsed time T20 in the predicted consumption time zone T200.

In this preferred embodiment, the model generator 83a adds the predicted power consumption amount V20 for every future elapsed time T20 output from the machine leaner 83b to the training data to generate the learning model MD1. Accordingly, it is possible to enhance accuracy of machine learning, making it easier to appropriately predict the predicted power consumption amount V20 for every future elapsed time T20 in the predicted consumption time zone T200.

As described above, the specification includes the disclosures described in the following items.

### Item 1:

A power management device including:
a recorder that records a past power consumption amount of a load for every past elapsed time, the past elapsed time being a time that has elapsed previously;
a power consumption predictor that creates a predicted consumption time zone in which a predicted power consumption amount of the load for every future elapsed time is predicted based on the past power consumption amount for the every past elapsed time recorded in the recorder, the future elapsed time being a time to elapse in future;
a first calculator that calculates a system conversion efficiency in the predicted consumption time zone, the system conversion efficiency being a conversion efficiency of electric power for the every future elapsed time in a case of supplying the predicted power consumption amount for the every future elapsed time from a system power supply to the load, the system power supply being operable to supply electric power;
a second calculator that calculates a specific conversion efficiency in the predicted consumption time zone, the specific conversion efficiency being a conversion efficiency of electric power for the every future elapsed time in a case of supplying the predicted power consumption amount for the every future elapsed time from a specific power supply to the load, the specific power supply being installed separately from the system power supply;
a specifier that specifies, as a specific time zone, a time zone in which the specific conversion efficiency is greater than or equal to the system conversion efficiency in the predicted consumption time zone; and
a planner that makes a supply plan indicating which of the system power supply and the specific power supply supplies electric power for the every future elapsed time in the predicted consumption time zone such that electric power in the predicted power consumption amount is supplied from the specific power supply to the load for the every future elapsed time, in the specific time zone.

### Item 2:

The power management device of Item 1, in which
the first calculator calculates the system conversion efficiency such that as the predicted power consumption amount increases, the system conversion efficiency increases, and
the second calculator calculates the specific conversion efficiency such that as the predicted power consumption amount increases, the specific conversion efficiency increases.

### Item 3

The power management device of Item 1 or 2, in which
if the predicted power consumption amount is less than a predetermined reference power amount, the system conversion efficiency is higher than the specific conversion efficiency,
if the predicted power consumption amount is greater than or equal to the reference power amount, the specific conversion efficiency is greater than or equal to the system conversion efficiency, and
the specifier specifies, as the specific time zone, a time zone in which the predicted power consumption amount is greater than or equal to the reference power amount in the predicted consumption time zone.

### Item 4:

The power management device of any one of Items 1 to 3, in which
the power consumption predictor includes
a model generator that generates a leaning model using the past power consumption amount for the every past elapsed time as training data, a date and time for the every past elapsed time as an input, and the past power consumption amount for the every past elapsed time as an output, and
a machine leaner that inputs a date and time for the every future elapsed time to the leaning model and outputs the predicted power consumption amount for the every future elapsed time, in the predicted consumption time zone.

### Item 5:

The power management device of Item 4, in which the model generator adds, to the training data, the predicted power consumption amount for the every future elapsed time output from the machine leaner, and generates the leaning model.

### Item 6:

A power management system including:
the power management device of any one of Items 1 to 5;
the system power supply; and
the specific power supply.

## Claims

1. A power management device (70) comprising:
a recorder (81) that records a past power consumption amount (V10) of a load (8) for every past elapsed time (T10), the past elapsed time (T10) being a time that has elapsed previously;
a power consumption predictor (83) that creates a predicted consumption time zone (T200) in which a predicted power consumption amount (V20) of the load (8) for every future elapsed time (T20) is predicted based on the past power consumption amount (V10) for the every past elapsed time (T10) recorded in the recorder (81), the future elapsed time (T20) being a time to elapse in future;
a first calculator (85) that calculates a system conversion efficiency (R1) in the predicted consumption time zone (T200), the system conversion efficiency (R1) being a conversion efficiency of electric power for the every future elapsed time (T20) in a case of supplying the predicted power consumption amount (V20) for the every future elapsed time (T20) from a system power supply (10) to the load (8), the system power supply (10) being operable to supply electric power;
a second calculator (87) that calculates a specific conversion efficiency (R2) in the predicted consumption time zone (T200), the specific conversion efficiency (R2) being a conversion efficiency of electric power for the every future elapsed time (T20) in a case of supplying the predicted power consumption amount (V20) for the every future elapsed time (T20) from a specific power supply (60) to the load (8), the specific power supply (60) being installed separately from the system power supply (10);
a specifier (91) that specifies, as a specific time zone (T300), a time zone in which the specific conversion efficiency (R2) is greater than or equal to the system conversion efficiency (R1) in the predicted consumption time zone (T200); and
a planner (93) that makes a supply plan (P100) indicating which of the system power supply (10) and the specific power supply (60) supplies electric power for the every future elapsed time (T20) in the predicted consumption time zone (T200) such that electric power in the predicted power consumption amount (V20) is supplied from the specific power supply (60) to the load (8) for the every future elapsed time (T20), in the specific time zone (T300).

2. The power management device (70) according to claim 1, wherein
the first calculator (85) calculates the system conversion efficiency (R1) such that as the predicted power consumption amount (V20) increases, the system conversion efficiency (R1) increases, and
the second calculator (87) calculates the specific conversion efficiency (R2) such that as the predicted power consumption amount (V20) increases, the specific conversion efficiency (R2) increases.

3. The power management device (70) according to claim 1 or 2, wherein
if the predicted power consumption amount (V20) is less than a predetermined reference power amount (NV1), the system conversion efficiency (R1) is higher than the specific conversion efficiency (R2),
if the predicted power consumption amount (V20) is greater than or equal to the reference power amount (NV1), the specific conversion efficiency (R2) is greater than or equal to the system conversion efficiency (R1), and
the specifier (91) specifies, as the specific time zone (T300), a time zone in which the predicted power consumption amount (V20) is greater than or equal to the reference power amount (NV1) in the predicted consumption time zone (T200).

4. The power management device (70) according to any one of claims 1 to 3, wherein
the power consumption predictor (83) includes
a model generator (83a) that generates a leaning model (MD1) using the past power consumption amount (V10) for the every past elapsed time (T10) as training data, a date and time (t11) for the every past elapsed time (T10) as an input, and the past power consumption amount (V10) for the every past elapsed time (T10) as an output, and
a machine leaner (83b) that inputs a date and time (t21) for the every future elapsed time (T20) to the leaning model (MD1) and outputs the predicted power consumption amount (V20) for the every future elapsed time (T20), in the predicted consumption time zone (T200).

5. The power management device (70) according to claim 4, wherein the model generator (83a) adds, to the training data, the predicted power consumption amount (V20) for the every future elapsed time (T20) output from the machine leaner (83b), and generates the leaning model (MD1).

6. A power management system (100) comprising:
the power management device (70) according to any one of claims 1 to 5;
the system power supply (10); and
the specific power supply (60).
